# EUROPEAN PATENT APPLICATION

(11) **EP 4 694 523 A1**
(43) Date of publication of application: **11.02.2026**
(21) Application number: 23929059.6
(22) Date of filing: 24.03.2023
(51) Int. Cl.: H04W 74/08

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: RGTH
(86) International application number: PCT/CN2023/083698
(87) International publication number: WO 2024/197455

(57) **Abstract**

Embodiments of the present application provide a wireless communication mothod and a device. The method is applicable to a first device and comprises: by means of channel access of a plurality of channels, acquiring at least one time domain resource on at least one of the plurality of channels, wherein the at least one time domain resource comprises a target time domain resource corresponding to a second device. In the present application, by means of channel access of the plurality of channels, the first device acquires at least one time domain resource on at least one of the plurality of channels, wherein the at least one time domain resource comprises the target time domain resource corresponding to the second device. Therefore, the second device may implement wireless communication on a license-free spectrum, and conflicts and interference generated between the second device and other devices may be reduced.

## Description

### TECHNICAL FIELD

Embodiments of the present disclosure relate to the field of communications, and in particular, to a wireless communication method and device.

### BACKGROUND

A zero power device has low complexity and low cost, may be maintenance-free and battery-free, may support power harvesting and/or back scattering communication, and may achieve a high-density and large-scale deployment at a relatively low cost. The use of unlicensed frequency bands is also an important deployment scenario in cellular communication systems. However, since the zero power device lacks channel access capability, in a case where an unlicensed spectrum is used, how the zero power terminal may achieve communication on the unlicensed spectrum and reduce conflict and interference with other devices is an urgent technical problem to be solved in this field.

### SUMMARY

Embodiments of the present disclosure provide a wireless communication method and device, which may achieve communication on an unlicensed spectrum and reduce conflict and interference with other devices.

In a first aspect, the embodiments of the present disclosure provide a wireless communication method, which is applied to a first device and includes:
obtaining, through channel access of multiple channels, at least one time domain resource on at least one channel in the multiple channels, where the at least one time domain resource includes a target time domain resource corresponding to a second device.

In a second aspect, the embodiments of the present disclosure provide a wireless communication method, which is applied to a second device and includes:
receiving a first signal transmitted by a first device;
where information carried by the first signal includes first information; the first information is used for indicating that at least one time domain resource obtained by the first device on at least one channel in multiple channels through channel access of the multiple channels includes a target time domain resource corresponding to the second device, or the first information is used for indicating the target time domain resource.

In a third aspect, the embodiments of the present disclosure provide a first device configured to perform the method in the above first aspect or various implementations thereof. Specifically, the first device includes functional module(s) configured to perform the method in the above first aspect or various implementations thereof.

In an implementation, the first device may include a processing unit, and the processing unit is configured to perform functions related to information processing. For example, the processing unit is a processor.

In an implementation, the first device may include a transmitting unit and/or a receiving unit. The transmitting unit is configured to perform functions related to transmission, and the receiving unit is configured to perform functions related to reception. For example, the transmitting unit is a transmitter or an emitter, and the receiving unit is a receiver or an acceptor. As another example, the first device is a communication chip, the transmitting unit is an input circuit or an interface of the communication chip, and the transmitting unit is an output circuit or an interface of the communication chip.

In a fourth aspect, the embodiments of the present disclosure provide a second device configured to perform the method in the above second aspect or various implementations thereof. Specifically, the second device includes functional module(s) configured to perform the method in the above second aspect or various implementations thereof.

In an implementation, the second device may include a processing unit, and the processing unit is configured to perform functions related to information processing. For example, the processing unit is a processor.

In an implementation, the second device may include a transmitting unit and/or a receiving unit. The transmitting unit is configured to perform functions related to transmission, and the receiving unit is configured to perform functions related to reception. For example, the transmitting unit is a transmitter or an emitter, and the receiving unit is a receiver or an acceptor. As another example, the second device is a communication chip, the receiving unit is an input circuit or an interface of the communication chip, and the transmitting unit is an output circuit or an interface of the communication chip.

In a fifth aspect, the embodiments of the present disclosure provide a first device including a processor, a memory and a transceiver. The memory is configured to store a computer program, and the processor is configured to call the computer program stored in the memory and run the computer program, to enable the transceiver to perform the method in the above first aspect or various implementations thereof.

In an implementation, there are one or more processors, and there are one or more memories.

In an implementation, the memory may be integrated with the processor, or the memory may be provided separately from the processor.

In an implementation, the transceiver includes a transmitter (an emitter) and a receiver (an acceptor).

In a sixth aspect, the embodiments of the present disclosure provide a second device including a processor, a memory and a transceiver. The memory is configured to store a computer program, and the processor is configured to call the computer program stored in the memory and run the computer program, to enable the transceiver to perform the method in the above second aspect or various implementations thereof.

In an implementation, there are one or more processors, and there are one or more memories.

In an implementation, the memory may be integrated with the processor, or the memory may be provided separately from the processor.

In an implementation, the transceiver includes a transmitter (an emitter) and a receiver (an acceptor).

In a seventh aspect, the embodiments of the present disclosure provide a chip configured to implement the method in any of the above first aspect and the above second aspect or various implementations thereof. Specifically, the chip includes: a processor configured to call a computer program from a memory and run the computer program, to enable a device equipped with the chip to perform the method in any of the above first aspect and the above second aspect or various implementations thereof.

In an eighth aspect, the embodiments of the present disclosure provide a computer-readable storage medium configured to store a computer program, where the computer program, when run on a computer, enables the computer to perform the method in any of the above first aspect and the above second aspect or various implementations thereof.

In a ninth aspect, the embodiments of the present disclosure provide a computer program product including computer program instructions, where the computer program instructions enable a computer to perform the method in any of the above first aspect and the above second aspect or various implementations thereof.

In a tenth aspect, the embodiments of the present disclosure provide a computer program, where the computer program, when run on a computer, enables the computer to perform the method in any of the above first aspect and the above second aspect or various implementations thereof.

Based on the above technical solutions, the at least one time domain resource is obtained, through the channel access of the multiple channels, on the at least one channel in the multiple channels, where the at least one time domain resource includes the target time domain resource corresponding to the second device, which may enable the second device to achieve wireless communication on an unlicensed spectrum and reduce conflict and interference with other devices.

### BRIEF DESCRIPTION OF THE DRAWINGS

FIG. 1 is a schematic diagram of a communication system provided in embodiments of the present disclosure.
FIG. 2 is an example of a physical layer protocol data unit (PPDU) provided in the embodiments of the present disclosure.
FIG. 3 is an example of a frame format of a media access control (MAC) frame provided in the embodiments of the present disclosure.
FIG. 4 is a schematic flowchart of a wireless communication method provided in the embodiments of the present disclosure.
FIG. 5 is an example of a channel access process provided in the embodiments of the present disclosure.
FIG. 6 is another example of a channel access process provided in the embodiments of the present disclosure.
FIG. 7 is an example of a resource unit provided in the embodiments of the present disclosure.
FIG. 8 is a schematic block diagram of a first device provided in the embodiments of the present disclosure.
FIG. 9 is a schematic block diagram of a second device provided in the embodiments of the present disclosure.
FIG. 10 is a schematic block diagram of a fourth device provided in the embodiments of the present disclosure.
FIG. 11 is a schematic block diagram of a chip provided in the embodiments of the present disclosure.

### DETAILED DESCRIPTION

Technical solutions in the embodiments of the present disclosure will be described below in conjunction with the accompanying drawings.

The embodiments of the present disclosure may be applied to various communication systems. For example, the communication systems to which the embodiments of the present disclosure may be applied include but are not limited to: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a universal mobile telecommunication system (UMTS), a wireless local area network (WLAN), wireless fidelity (WiFi), a next generation communication system, a zero power communication system, cellular Internet of Things, cellular passive Internet of Things, or other communication systems.

The cellular Internet of Things is a development product of combination of a cellular mobile communication network and Internet of Things. The cellular Internet of Things is also referred to as passive cellular Internet of Things, which is composed of network device(s) and passive terminal(s). In the cellular passive Internet of Things, a passive terminal may communicate with other passive terminals through the network device, alternatively, the passive terminal may communicate using a device to device (D2D) communication manner, and the network device only needs to transmit a carrier signal, that is, a power supply signal, to supply power to the passive terminal.

Generally speaking, traditional communication systems support a limited quantity of connections, and are easy to implement. However, with development of the communication technology, mobile communication systems will support not only the traditional communication, but also, for example, the D2D communication, machine to machine (M2M) communication, machine type communication (MTC), vehicle to vehicle (V2V) communication or the like. The embodiments of the present disclosure may also be applied to these communication systems.

It should be understood that the communication system in the embodiments of the present disclosure may be applied to a carrier aggregation (CA) scenario, a dual connectivity (DC) scenario, or a standalone (SA) networking scenario. The embodiments of the present disclosure do not limit the applied spectrum. For example, the embodiments of the present disclosure may be applied to a licensed spectrum or to an unlicensed spectrum.

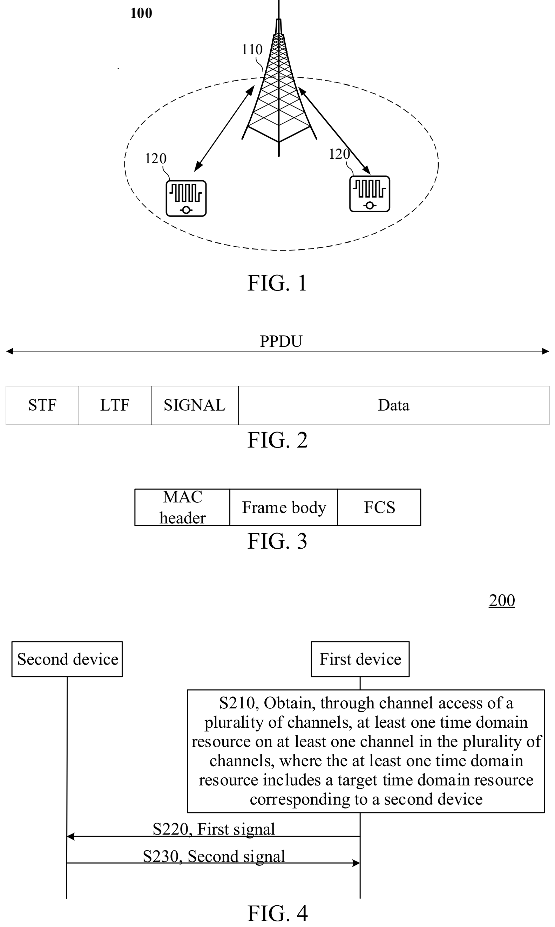

FIG. 1 is a schematic diagram of a communication system 100 provided in the embodiments of the present disclosure.

As illustrated in FIG. 1, the communication system 100 may include a network device 110, and the network device 110 may be a device for communicating with terminal devices 120 (also referred to as communication terminals or terminals). The network device 110 may provide communication coverage for a specific geographical area and may communicate with the terminal device located within the coverage area.

For example, the network device 110 may be a device used for communicating with a mobile device. The network device 110 may be an access point (AP) in WLAN, a base transceiver station (BTS) in GSM or CDMA, or may be a base station (NodeB, NB) in WCDMA, or may be an evolutional base station (evolutional Node B, eNB or eNodeB) in LTE, a relay station or an access point, or an in-vehicle device, a wearable device, a network device (gNB) in an NR network, a network device in a future evolved PLMN network, or the like.

The network device 110 provides services for a cell, and the terminal device 120 communicates with the network device through a transmission resource (e.g., a frequency domain resource, or a spectrum resource) used by the cell. The cell may be a cell corresponding to the network device 110 (e.g., a base station), and the cell may belong to a macro base station or a base station corresponding to a small cell. The small cell here may include a metro cell, a micro cell, a pico cell, a femto cell, or the like. These small cells have the characteristics of small coverage range and low transmission power, which are applicable for providing a high-speed data transmission service.

For example, the terminal device 120 may also be referred to as a user equipment (UE), an access terminal, a user unit, a user station, a mobile station, a mobile console, a remote station, a remote terminal, a mobile device, a user terminal, a terminal, a wireless communication device, a user agent, a user device, or the like. The terminal device may be a station (ST) in the WLAN, a cellular phone, a cordless phone, a session initiation protocol (SIP) phone, a wireless local loop (WLL) station, a personal digital assistant (PDA) device, a handheld device with a wireless communication function, a computing device or another processing device connected to a wireless modem, an in-vehicle device, a wearable device, and a terminal device in a next generation communication system such as the NR network, or a terminal device in a future evolved public land mobile network (PLMN) network, or a zero power device.

For example, the terminal device 120 may be a wearable device. The wearable device may also be referred to as a wearable smart device, which is a general term of wearable devices developed by performing intelligent design on daily wear such as glasses, gloves, watches, clothing and shoes using wearable technologies. The wearable device is a portable device that is worn directly on a body or integrated into clothes or accessories of users. The wearable device is not merely a hardware device, and implements powerful functions through software supporting as well as data interaction or cloud interaction. Generalized wearable smart devices include devices (e.g., a smart watch or smart glasses) that are fully functional, large in size, and may implement full or partial functions without relying on smart phones, as well as devices (e.g., various smart bracelets or smart jewelries for monitoring physical signs) that only focus on a certain type of application functions and need to be used in conjunction with other devices (e.g., smart phones).

As another example, the terminal device 120 may be a zero power device. The zero power device may be understood as a device with power consumption lower than preset power consumption. For example, the zero power device includes a passive terminal, and even includes a semi-passive terminal.

It should be understood that FIG. 1 is merely an example of the present disclosure and should not be construed as a limitation to the present disclosure.

For example, in other alternative embodiments, the communication system 100 may include a plurality of network devices, and each network device may include other numbers of terminal devices within the coverage range thereof. As another example, a device with a communication function in a network/system in the embodiments of the present disclosure may be referred to as a communication device. Taking the communication system 100 illustrated in FIG. 1 as an example, the communication device may include the network device 110 and the terminal devices 120 with communication functions. The network device 110 and the terminal device 120 may be specific devices described above and will not be repeated here. The communication system 100 may further include other communication devices, such as a network controller, a mobile management entity, and other network entities, which will not be limited in the embodiments of the present disclosure in detail.

Furthermore, it should also be understood that the terms "system" and "network" are often used interchangeably herein. The term "and/or" herein is merely an association relationship for describing associated objects, and indicates that there may be three relationships. For example, A and/or B may mean three cases: A alone, both A and B, and B alone. In addition, the character "/" herein generally indicates that associated objects before and after this character are in an "or" relationship. The term "correspondence" herein may indicate a direct or indirect correspondence between two items, or an association relationship between the two items, or a relationship of indicating and being indicated, configuration and being configured, or the like. The term "indication" herein may be a direct indication, an indirect indication, or an indication of an associated relationship. For example, A indicating B may mean that A directly indicates B, for example, B may be obtained through A; alternatively, A indicating B may mean that A indirectly indicates B, for example, A indicates C, and B may be obtained through C; alternatively, A indicating B may mean that there is an association relationship between A and B. The term "pre-defined" or "predefined" herein may be implemented by pre-saving corresponding codes, tables or other manners that may be used to indicate relevant information in a device (e,g,, including a terminal device and a network device). The present disclosure does not limit its specific implementation. For example, pre-configuration may be defined in a protocol. It should also be understood that in the embodiments of the present disclosure, the "protocol" may refer to a standard protocol in the communication field, for example, it may include an LTE protocol, an NR protocol, and related protocols used in future communication systems, which will not limited in the present disclosure.

To facilitate understanding of the technical solutions provided by the present disclosure, the zero power device and related technologies will be described below.
(1) Classification of zero power terminals.

Based on power sources and usage manners of the zero power terminals, the zero power terminals may be classified into following types:
1. Passive zero power terminal.

The zero power device does not need a built-in battery. In a case where the zero power device approaches the network device (e.g., a reader/writer of a radio frequency identification (RFID) system), the zero power device is within a near-field range formed by radiation of antenna(s) of the network device. Therefore, the antenna(s) of the zero power device generates an induced current through electromagnetic induction, and the induced current drives a low power consumption chip circuit of the zero power device, so as to implement demodulation of a signal on a forward link (i.e., downlink, a link from the network device to the zero power device), modulation of a signal on a backward link (i.e., uplink, a link from the zero power device to the network device) and other operations. For a back scattering link, the zero power device transmits a signal by the implementation of back scattering.

It may be seen that the passive zero power device does not need a built-in battery for driving either in the forward link or the backward link, so that the passive zero power device is a true zero power device.

The passive zero power device does not need a battery, and a radio frequency circuit and a baseband circuit are very simple, and for example, a low-noise amplifier (LNA), a power amplifier (PA), a crystal oscillator, an analog-to-digital converter (ADC) and other devices are not needed. Therefore, the passive zero power device has small size, light weight, very cheap price, long service life, and other advantages.

The passive zero power terminal may also support other power harvesting manners. By harvesting power from the environment (e.g., light power, thermal power, kinetic power or mechanical energy), the passive zero power terminal may obtain power for driving circuits to support the terminal device to communicate.

2. Semi-passive zero power terminal.

The semi-passive zero power device itself also does not install a conventional battery therein, but may harvest radio wave power by using a radio frequency (RF) power harvesting module, or harvest power from the environment (e.g., solar power, thermal power or mechanical vibration power) by using a power harvesting module, and store the harvested power in a power storage unit (e.g., a capacitor). After obtaining the power, the power storage unit may drive a low power consumption chip circuit of the zero power device, so as to implement demodulation of a signal on a forward link, modulation of a signal on a backward link and other operations. For a back scattering link, the zero power device transmits a signal by the implementation of back scattering.

It may be seen that the semi-passive zero power device does not need a built-in battery for driving either in the forward link or in the backward link. Although the power stored in the capacitor is used in the operation, the power comes from the radio power harvested by the power harvesting module. Therefore, the semi-passive zero power device is also a true zero power device.

The semi-passive zero power device inherits many advantages of the passive zero power device, and thus the semi-passive zero power device has small size, light weight, very cheap price, long service life and other advantages.

3. Active zero power terminal.

The zero power device used in some scenarios may be an active zero power device, and such a terminal may have a built-in battery (a conventional battery, such as a dry cell battery or a rechargeable lithium battery). The battery is used to drive a low power consumption chip circuit of the zero power device, so as to implement demodulation of a signal on a forward link, modulation of a signal on a backward link and other operations. However, for a back scattering link, the zero power device transmits a signal by the implementation of back scattering. Therefore, the zero power of such a terminal is mainly reflected in the fact that the signal transmission on the backward link does not need power of the terminal itself, but uses the manner of the back scattering. Although the active zero power device uses the battery, the power consumption is very low due to the use of an ultra-low power consumption communication technology, so that a battery life may be greatly improved compared to that in a prior art.

For the active zero power device, the built-in battery supplies power to an RFID chip to increase a reading/writing distance of a tag, thereby improving reliability of the communication. Therefore, the active zero power device is applied in some scenarios with relatively high requirements on the communication distance and reading latency, or the like.

It is worth noting that some of the zero power terminals, such as the semi-passive zero power terminals or the active zero power terminals, may also have capability of active transmission, that is, in addition to communicating by means of the back scattering, the backward link may also communicate by means of the active transmission.

(2) Cellular passive Internet of Things.

With the increase in 5G industry applications, types of connected objects and application scenarios are increasing, and there also will be increasing requirements on cost and power consumption of communication terminals. Applications of battery-free and low-cost passive internet of things devices become key technologies of the cellular internet of things, which enriches the types and number of 5G network-linked terminals, and truly implements the Internet of Everything. The passive internet of things device may be extended based on existing zero power devices, so as to be applicable to the cellular internet of things.

(3) Device based on ambient power.

In the NR system and the WiFi system, battery-free and low-cost devices may support large-scale deployment with low-cost and maintenance-free of the IoT devices. The IoT device based on ambient power supported in the NR system and the WiFi system, is referred to as an ambient IoT device or an ambient powered IoT (AMP IoT) device. The ambient IoT refers to an IoT device using various types of ambient power, such as wireless radio frequency power, light power, solar power, thermal power or mechanical power. The ambient IoT device may have no power storage capability or may have very limited power storage capability (e.g., using a capacitor with a capacity of tens of microfarads (µF)). Such a device is similar to a passive device or a semi-passive device in zero power communications.

(4) Physical layer protocol data unit (PPDU) in WiFi technology.

Information of a WiFi device is transmitted based on a PPDU frame.

FIG. 2 is an example of a PPDU provided in the embodiments of the present disclosure.

As illustrated in FIG. 2, the PPDU frame includes a physical layer header and a data part. The physical layer header includes three parts: a short training field (STF), a long training field (LTF), and some specific settings for the data part, which is named SIGNAL. The STF is mainly composed of 10 short symbols (t1 to t10), and each symbol of the STF is 0.8 us and includes many functions, which are mainly used for realizing frame synchronization and coarse frequency synchronization. Here, t1 to t7 mainly includes signal detect, auto gain control (AGC), diversity selection and other functions, and t8 to t10 mainly includes coarse frequency (Coarse Freq), offset estimation, timing synchronization and other functions. The LTF achieves fine frequency synchronization and channel estimation. The SIGNAL part carries information related to the data part, which includes data transmission rate, data packet length information, reserved bits, tail bits, or the like.

The data part of the PPDU carries a media access control (MAC) frame.

FIG. 3 is an example of a frame format of a MAC frame provided in the embodiments of the present disclosure.

As illustrated in FIG. 3, the frame format of the MAC frame includes following parts: a MAC header, a frame body and a frame check sequence (FCS).

(5) Unlicensed spectrum.

The unlicensed spectrum is a spectrum allocated by countries and regions that may be used for radio device communications. This spectrum is generally considered to be a shared spectrum, that is, as long as communication devices in different communication systems meets regulatory requirements set by the countries or regions on the spectrum, the spectrum may be used without applying for exclusive spectrum authorization from the government. In order to enable various communication systems that use unlicensed spectrum for wireless communication to coexist in a friendly manner on the spectrum, some countries or regions have stipulated regulatory requirements that must be met for the use of unlicensed spectrum. For example, in Europe, the communication devices follow a "listen-before-talk" (LBT) principle, that is, before transmitting a signal on a channel of the unlicensed spectrum, a communication device needs to first perform channel sensing, only in a case where a channel sensing result is that the channel is idle, the communication device may transmit a signal; and if the channel sensing result of the communication device on the channel of the unlicensed spectrum is that the channel is busy, the communication device cannot transmit a signal. Moreover, for fairness, during one transmission, the duration for which a communication device uses a channel of the unlicensed spectrum to transmit a signal cannot exceed the maximum channel occupancy time (MCOT).

The technology of user standardized unlicensed spectrums may be used in the cellular communication systems, for example, the NR-U technology of 3GPP Rel-16 uses unlicensed frequency bands below 7 GHz. In subsequent technological evolution, the use of unlicensed spectrum in higher frequency bands and related technologies such as the 52.6 GHz to 71 GHz discussed in the Rel-17 standard may also be considered. The widely used WiFi technology is also a communication technology that uses the unlicensed frequency bands.

(6) Channel access mechanism.

In the 802.11 protocol, a basic channel access protocol is a distributed coordination function (DCF), which may enable different compatible station (STA) devices to share channels through a carrier sense multiple access with collision avoidance (CSMA/CA) mechanism, so as to reduce probability of conflict.

DCF mainly includes four core mechanisms.
1. Carrier sensing mechanism.

The carrier sensing mechanism is classified into physical carrier sensing and virtual carrier sensing. In a case where a result of any sensing indicates that the channel is busy, the channel is busy.

The physical carrier sensing uses three channel idle detection manners. That is, power detection, carrier detection and power-carrier mixed detection, which are collectively referred to as a clear channel assessment (CCA). The power detection is to determine power of a received signal. In a case where the received power is greater than a threshold ED_threshold specified by the physical layer, the channel is considered to be occupied. The carrier detection is to detect a preamble part of a signal in the channel and determine whether the channel is occupied based on the detection result.

The virtual carrier sensing mechanism is provided by the MAC, and in the 802.11 standard, virtual sensing is implemented by using a network allocation vector (NAV). A Dur/ID field in the MAC frame stores "duration". For a STA that has been received the information, the time that the channel will be occupied is determined, and the time that transmission of the channel itself needs to be delayed is determined. The NAV is a timer, which is used to define how long a current channel will be occupied. The starting value of the timer is the duration of the last received frame, and countdown of the timer ends at 0. Each sensed STA uses the NAV timer. During data communication, a STA that has occupied a channel will inform other STAs how long the STA will take through a duration field in the frame, and a STA that has not acquired a channel will update its own NAV value by comparing a duration value in a received packet. In a case where the NAV value is 0 and the physical carrier sensing indicates that the channel is idle, the current channel is considered to be idle.

2. Interframe space (IFS) mechanism.

In order to avoid collisions as much as possible, 802.11 stipulates that after completing transmission, all stations should wait for a very short period of time (continue to sense) before transmitting a next frame. A general term for this period of time is the IFS. The length of the IFS depends on a type of a frame to be transmitted by the station. A frame with high-priority need to wait for a shorter time, so the frame may prioritize obtaining a transmitting right, while a frame with low-priority should wait for a longer time. In response to the frame with low-priority having not been transmitted yet and other frames with high-priority having been transmitted to the media, the media becomes busy and the frame with low-priority may only be postponed, which reduces chances of collisions.

The IFS provides classification based on different priorities for wireless medium access. Different priorities are classified according to the duration of IFS. The shorter the duration, the higher the corresponding priority. The durations of the interframe space is listed from small to large as follows.
1. Short interframe space (SIFS).
   The SIFS is the shortest time segment and is used to separate a frame that need to response immediately, such as a control frame (e.g., RTS/CTS/ACK). The shortest space between two transmissions in sequence in a frame exchange is used to prevent other stations waiting for the medium from attempting to use the medium.
2. Point coordination function interframe space (PIFS).
   The PIFS may only be used by stations operating in a point coordination function (PCF) mode.
3. Distributed coordination function interframe space (DIFS).
   The DIFS may only be used by stations operating in a distributed coordination function (DCF) mode.
4. Extended interframe space (EIFS): in a case where a previous frame is error, a transmitting node has to delay the EIFS period instead of the DIFS period before transmitting a next frame.

3. Random backoff mechanism.

In 802.11, a binary exponential backoff algorithm is used to resolve the time at which a node needs to back off in a case where a transmission fails or a conflict occurs. In a case where the MAC layer has a frame to transmit, after both the physical carrier sensing and the virtual carrier sensing indicate that the channel is idle, in response to a count value of a backoff window being not 0, the count value continues to be reduced in units of slot time, otherwise a backoff window is randomly generated for performing backoff. The node selects a random backoff count value based on a random number in a contention window. After the backoff time is selected, it is equivalent to setting a backoff timer. The value of the contention window is a parameter value between the minimum contention window (CWmin) and the maximum contention window (CWmax) of a physical characteristic value, which is used to allow the node to select a range of the random backoff count value (backoff counter). The station continuously monitors channels in the slot time. In response to the channel being detected to be idle, the backoff timer continues to count down by 1. In response to the channel being detected to be busy, the remaining time of the backoff timer is frozen, and the station waits for the channel to become idle again and after another DIFS time has passed, it continues to count down from the remaining time. In a case where the backoff timer reaches zero, the entire data frame begins to be transmitted.

4. RTS/CTS handshake mechanism.

IEEE 802.11 RTS/CTS stands for a request to send/clear to send (RTS/CTS) protocol, which is a mechanism adopted by the 802.11 protocol to reduce conflicts caused by a hidden node problem. A basic idea of the RTS/CTS mechanism is to reserve a channel through a short control packet. If a transmitting station wants to transmit a message to a receiving station, the transmitting station must first transmit an RTS control frame. After receiving the RTS, stations around the transmitting station set their own network allocation vector (NAV) values based on a duration field. After receiving the RTS, the receiving station replies with a CTS control frame. After receiving the CTS, the stations around the receiving station set their own NAV values based on a duration field. A station with the NAV value other than 0 cannot perform idle monitoring of the channel, so as to avoid conflicts with transmissions between the transmitting station and the receiving station.

It can be seen from the above that the zero power device has low complexity and low cost, may be maintenance-free and battery-free, may support power harvesting and/or back scattering communication, and may achieve a high-density and large-scale deployment at a relatively low cost. The use of unlicensed frequency bands is also an important deployment scenario in cellular communication systems.

Due to limitation of power consumption of the zero power terminal, the zero power terminal has a requirement of low complexity; for example, a receiver only supports a simple modulation and demodulation manner such as amplitude Shift Keying (ASK) or frequency shift keying (FSK), instead of orthogonal frequency division multiplexing (OFDM). However, for the use of unlicensed spectrum, in order to ensure fairness in channel use, if a zero power terminal needs to occupy a channel to transmit data, it also needs to perform the corresponding CCA to determine whether the channel is idle; moreover, it also needs to support the CSMA/CA mechanism to be compatible and coexist with existing devices. Taking the WiFi system as an example, the channel occupancy of the zero power terminal needs to support a DCF protocol, which requires the zero power terminal to detect the existing PPDU frames transmitted based on OFDM to meet the physical and virtual carrier sensing, as well as the support of the RTS/CTS mechanism. However, this is not possible for the zero power terminal. In light of this, the present disclosure provides a wireless communication method, which may enable a zero power terminal to communicate with existing devices by sharing a channel while using an unlicensed spectrum, so as to reduce conflict and interference. Specifically, different countries and regions have different regulations for the use of the unlicensed spectrum below 1 GHz. The communication technology used on the corresponding frequency band needs to meet the spectrum usage regulations. For example, 802.11ah technology is mainly aimed at supporting IoT devices, and uses a spectrum below 1 GHz and supports channel bandwidths including 1 MHz, 2 MHz, 4 MHz, 8 MHz and 16 MHz. Here, 1 MHz and 2 MHz are the basic channel bandwidths. In China, the use of the 920 MHz to 925 MHz frequency band for radio frequency identification requires that the channel bandwidth is no greater than 250 kHz, and the channel center frequency fc (MHz) is equal to 920.125 + M × 0.25 (M is an integer ranging from 0 to 19). The operation mode is frequency hopping, and the maximum dwell time of each frequency hopping channel is 2 seconds. These spectrum usage regulations are designed to ensure fairness in the use of spectrum by different devices and reduce interference between the different devices. In a multi-channel access scenario, channel access may access multiple channels at the same time, and use the channels for transmission after successful channel access. In view of this, the embodiments of the present disclosure provide a method for achieving transmission of a zero power device under a multi-channel access condition.

FIG. 4 is a schematic flowchart of a wireless communication method 200 provided in the embodiments of the present disclosure. The wireless communication method 200 may be interactively performed by a first device and a second device.

As illustrated in FIG. 4, the method 200 may include:
S210, obtaining, by the first device through channel access of multiple channels, at least one time domain resource on at least one channel in the multiple channels, where the at least one time domain resource includes a target time domain resource corresponding to a second device.

In other words, the first device may obtain the time domain resource on the at least one channel in the multiple channels through channel access of the multiple channels. The at least one time domain resource at least includes a target time domain resource reserved for the second device, or in other words, the at least one time domain resource at least includes a target time domain resource allocated for the second device.

For the first device, in the at least one time domain resource obtained by the first device through the channel access, the time domain resource may also be referred to as, obtained by the first device, a transmission opportunity (TXOP), target wake time (TWT), service period (SP), restricted access window (RAW), or channel occupancy time (COT), or other terms with similar meanings. That is, the at least one time domain resource may include a time period in the TXOP, the TWT, the SP, the RAW, or the RAW on the at least one channel.

Similarly, for the second device, the target time domain resource is a time domain resource reserved by the first device for the second device, which may also be referred to as a time period in used by the second device, a TXOP, TWT, SP, RAW, RAW, or other terms with similar meanings. That is, the target time domain resource may include at least one of: the time period in the TXOP, the TWT, the SP, the RAW, or the RAW.

For example, the target time domain resource may be a resource used by the second device to transmit information and/or receive information.

In the embodiments, the first device obtains the at least one time domain resource on the at least one channel in the multiple channels through the channel access of the multiple channels, where the at least one time domain resource includes the target time domain resource corresponding to the second device, so as to enable the second device to achieve wireless communication on the unlicensed spectrum and reduce conflict and interference with other devices.

In some embodiments, the first device may be any device having a relay function (i.e., having both functions of a Relay AP and a Relay STA). For example, the second device may implement communication between the second device and other devices through the first device. For example, the first device includes but is not limited to: an AP device or a STA in a WiFi system, a base station or a UE in a cellular system, a power supply device, a control node in a communication network, or the like.

In some embodiments, the first device may be the AP device.

In some embodiments, the second device is a device without channel access capability.

In the embodiments, the first device may perform channel occupancy for the second device without the channel access capability to enable the second device to obtain a TXOP or channel occupancy time.

In some embodiments, the device without the channel access capability includes a zero power device.

From a perspective of power supply manners, the zero power device may include a device based on ambient power, such as an ambient power enabled IoT (AMP IoT) device or an ambient power IoT device (ambient IoT device), a battery-free terminal, or a maintenance-free terminal. The AMP IoT refers to an IoT device using various types of ambient power, such as wireless radio frequency power, light power, solar power, thermal power or mechanical power. The ambient IoT device may have no power storage capability or may have very limited power storage capability (e.g., using a capacitor with a capacity of tens of microfarads (µF)). The zero power device may be used as a communication terminal in a WiFi or cellular network.

In the embodiments, the first device performs channel occupancy for the zero power device without the channel access capability to enable the zero power device to obtain the transmission opportunity. This method may not only ensure compatibility of the zero power device with existing device channel access mechanisms, but also enable the zero power device to achieve wireless communication on the unlicensed spectrum. In addition, the first device may further provide a relay function for communication between the AP and the zero power device. Therefore, not only may coverage of the AP be improved, but also an impact on the existing AP may be reduced, where the AP does not be required to support a new physical layer air interface, and communication with the zero power device may be supported only through software upgrade, which enables a low deployment cost and ensures compatibility with existing systems.

In some embodiments, the second device is associated with the first device, or the second device is a child node device of the first device.

For example, the second device is associated with the first device, that is, the second device is connected to the first device upward, or the first device is connected to the second device downward.

Certainly, in other alternative embodiments, the first device may further be connected downward to other devices. For example, a device to which the first device is connected downward may be a device of a same type as or a different type from the second device, which will not be limited in the disclosure.

For example, in a case where the second device is a child node device of the first device, the first device may also be referred to as a parent node device of the second device.

In some embodiments, the child node device includes at least one of:
a device included in a basic service set (BSS) provided by the first device; or
a device associated to the first device.

For example, in a case where the BSS provided by the first device associates with or includes the second device, it indicates that the second device is a device associated with the first device. In other words, in a case where the second device is associated with the first device, the BSS provided by the first device associates with or includes the second device.

For example, in a case where the BSS provided by the first device associates with or includes the second device, the at least one time domain resource includes the target time domain resource. In other words, in a case where the second device is a device associated with the first device, the at least one time domain resource includes the target time domain resource.

It should be noted that the BSS is a basic service unit of a wireless network. The BSS is a basic structure of the 802.11 network, and has medium-sharing characteristics. The BSS provided by the first device may be understood as a service set composed of a plurality of devices (e.g., STAs) associated with the first device. Within the BSS provided by the first device, the plurality of devices associated with the first device are connected to the first device upward, and the plurality of devices associated with the first device may communicate or access other devices through the first device.

In some embodiments, the S210 may include:
determining, by the first device, a first parameter set used by the first device when performing channel access; and based on the first parameter set, obtaining, through the channel access of the multiple channels, the at least one time domain resource.

Since the zero power terminal cannot support existing channel access mechanisms, the zero power terminal needs to use a channel to transmit data with a help of the first device serving the zero power terminal to perform channel access, so as to obtain the TXOP for the zero power terminal. The first device may obtain channel access of at least one channel simultaneously through a channel access mechanism, that is, obtain the TXOP on the at least one channel. In the embodiments, in a case where the first device obtains channel access for transmission of the zero power device, a certain channel access priority may be ensured by setting certain parameter(s). It should be noted that during multi-channel access, since CCA performed by the first device on multiple channels may have different results, a channel set that successfully obtains the TXOP and a channel set on which CCA is performed by the first device may be different, for example, the former may be a subset of the latter.

In some embodiments, the multiple channels include a primary channel and at least one secondary channel; and the first parameter set includes at least one of:
a contention window (CW) parameter of the primary channel, an idle duration of the primary channel, or an idle duration of the secondary channel.

Under an enhanced distributed channel access (EDCA) mechanism, different service types may set different access categories (ACs), and each AC may correspond to a set of different EDCA parameters to meet different AC priorities. The EDCA parameters include an idle duration and a CW parameter. The idle duration may include DIFS, PIFS or the like, and the CW parameter may include the CWmin and the CWmax. In conjunction with the solutions of the present disclosure, in a case of multi-channel access, specific EDCA parameters may be defined for the access category. For example, a channel on which the first device performs channel access may include a primary channel and several secondary channels, and thus the CW parameter of the primary channel, the idle duration of the primary channel, and the idle duration of the secondary channel may be further defined.

In some embodiments, the first device obtaining, through the channel access of the multiple channels, the at least one time domain resource based on the first parameter set includes:
performing channel sensing on the primary channel;
in response to the primary channel being idle, determining that the at least one time domain resource includes a time domain resource on the primary channel;
performing channel sensing on the secondary channel within an idle duration of the secondary channel before a start time of the time domain resource on the primary channel; and
in response to the secondary channel being idle, determining that the at least one time domain resource includes a time domain resource on the secondary channel.

For example, the first device performs EDCA channel access on the primary channel, performs CCA on the secondary channel within an idle duration before start of the obtained TXOP, and in response to the result being idle, the TXOP acquired by the first device includes the TXOP on the secondary channel.

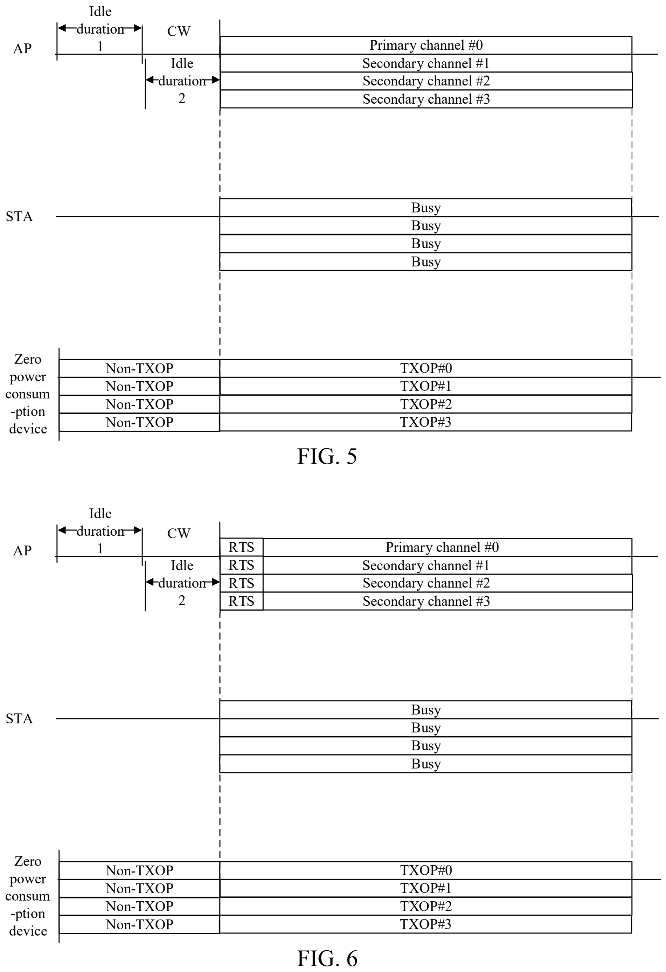

FIG. 5 is an example of a channel access process provided in the embodiments of the present disclosure.

As illustrated in FIG. 5, assuming that the first device is the AP, the AP performs the channel access on a primary channel #0, and performs the CCA on the secondary channels #1-3 within an idle duration 2 before start of the obtained TXOP, in response to the primary and the secondary channels being idle, the first device obtains the TXOP on the channels #0-3. For other STAs, during a period when the first device obtains the TXOP, the corresponding channel is busy. For example, the idle duration 1 = DIFS, the idle duration 2 = PIFS. EDCA parameters corresponding to the multi-channel access category include not only the idle duration 1 and the CW parameter for channel access on the primary channel, but also the idle duration 2 for channel access on the secondary channel.

In some embodiments, the first device performs channel access based on a parameter set of each of the multiple channels.

In the embodiments, the first device may use the parameter set of each of the multiple channels to perform independent channel access on a respective channel; where parameter sets of the multiple channels may be the same or different. In other words, the first device may perform independent EDCA on each channel in a channel set, where an AC corresponding to the EDCA of each channel may be the same or different.

It should be noted that the present disclosure does not limit a channel access mechanism for the first device to perform multi-channel access, and the above mechanism is only an example of the present disclosure. The first device may further have other channel access mechanisms. For example, in a case where the first channel performs channel access of multiple channels, a part of channels (one or more channels) may use a shared parameter set, and another part of the channels (one or more channels) may use an independent parameter set.

In order to protect the first device against conflict caused by channel access of third-party devices during the TXOP after obtaining multi-channel channel access, the first device may transmit a NAV-setting frame after obtaining the TXOP. The transmitting of this type of frame allows a third-party STA to set the NAV. Before the NAV returns to zero, the third-party STA will not attempt to perform CCA, so as to protect the TXOP. Specifically, the NAV-setting frame may be an RTS frame or a CTS frame, or other types of frames, and a duration field included in the NAV-setting frame may be used to reserve the channel occupancy time for the channel required for communication of the zero power device.

FIG. 6 is another example of a channel access process provided in the embodiments of the present disclosure.

As illustrated in FIG. 6, assuming that the first device is the AP, after obtaining TXOPs of four channels, the first device may transmit RTSs on the four channels, respectively, so that the third-party STA sets corresponding NAVs. During the TXOP, the STA will consider the status of the four channels to be busy, that is, the STA will not attempt to perform CCA.

In some embodiments, the method 200 may further include:
S220, transmitting, by the first device, a first signal to the second device; where information carried by the first signal includes first information; the first information is used for indicating that the at least one time domain resource includes the target time domain resource, or the first information is used for indicating the target time domain resource.

After obtaining a TXOP on at least one channel, the first device needs to transmit the first information to the zero power device, so that the zero power device determines a TXOP belonging to the zero power device itself (i.e., the target time domain resource mentioned above) based on the first information. The TXOP belongs to one channel on the at least one channel, and the TXOP corresponding to the zero power device is a part of a time period of the TXOP obtained by the first device (i.e., the at least one time domain resource mentioned above). The time period is the TXOP corresponding to the zero power device, which may also be referred to as the SP or the TWT or other similar terms corresponding to the zero power device. Specifically, the first device transmits the first signal to the zero power device through a first channel, and the first signal carries the first information. The first channel is any one of the multiple channels obtained by the first device through channel access, for example, the primary channel. The first information may enable the zero power device to determine the channel used for transmission and a target time period or time window information for transmission on the channel, for example, the TXOP, the SP, or the TWT.

In some embodiments, in a case where the at least one time domain resource is divided to include a plurality of resource units, and the target time domain resource includes at least one resource unit in the plurality of resource units.

In the embodiments, the at least one time domain resource is divided into the plurality of resource units. In a case where TXOPs of a plurality of signals obtained by the first device are shared with a plurality of zero power devices, different resource units may be used for transmissions of different zero power devices, so as to avoid collision and interference of the transmissions of the different zero power devices. This is equivalent to that multi-channel channel access performed through the first device may occupy channels for zero power devices that do not have channel access capability, which allows the zero power devices to obtain transmission opportunities. In addition, the first information is introduced to be helpful for the zero power device to determine a resource unit that may be used for transmission on the multi-channel TXOPs. Thus, not only may the plurality of zero power devices share the use of the multi-channel TXOPs, but also the transmission efficiency may be improved. Moreover, the method ensures compatibility with existing device channel access mechanisms and achieves communication of the zero power terminal

In some embodiments, the first information is used for indicating the at least one resource unit.

In other words, the first information may directly indicate the resource unit included in the target time domain resource corresponding to the second device, or in other words, the first information may directly indicate the resource unit used by the second device.

In some embodiments, the first information is used for indicating a device corresponding to each of the plurality of resource units.

For example, in a case where the first information is used for indicating a device corresponding to each of the plurality of resource units, the first device may transmit the first information to each of devices that use the plurality of resource units.

In some embodiments, a first bit in the first information is used for indicating whether a resource unit corresponding to a device other than the first device includes a resource unit associated with the first bit in the plurality of resource units.

For example, devices other than the first device may include one or more zero power devices in a plurality of zero power devices associated with the first device. For example, the first information may indicate whether the one or more zero power devices in the plurality of zero power devices associated with the first device transmit within the TXOP (e.g., including a plurality of resource units); after receiving the first information, a target zero power device indicated to be capable of transmission may determine a position of a target resource unit within the TXOP based on a preset rule. For example, the target zero power device may calculate the position of the target resource unit of the target zero power device in the plurality of resource units included in the TXOP based on an ID of the target zero power device. For example, the target zero power device may perform a modulo operation on the ID of the target zero power device to determine the position of the target resource unit of the target zero power device in the plurality of resource units included in the TXOP.

For example, devices other than the first device may include all zero power devices associated with the first device. For example, the first information may indicate whether all the zero power devices associated with the first device may be used for transmission in each resource unit in the TXOP (e.g., including a plurality of resource units), which is equivalent to that the first device may indicate whether one or more resource units in N resource units may be used for transmission. After receiving the first information, a target zero power device may determine a position of a target resource unit of the target zero power device in the one or more resource units indicated to be available for transmission based on a preset rule. For example, the target zero power device may calculate the position of the target resource unit of the target zero power device in a plurality of resource units included in the TXOP based on an ID of the target zero power device. For example, the target zero power device may perform a modulo operation on the ID of the target zero power device to determine the position of the target resource unit of the target zero power device in the plurality of resource units included in the TXOP.

In the embodiments, the first bit in the first information is used for indicating whether the resource units corresponding to the devices other than the first device include a resource unit associated with the first bit in a plurality of resource units. This is equivalent to that the first information may indicate the resource unit that may be used for transmission in the plurality of resource units by devices other than the first device. Thus, not only may the devices other than the first device share the use of resource units on the multiple channels, but also the transmission efficiency may be improved.

In some embodiments, the first bit in the first information is used for indicating whether a resource corresponding to a device associated with the first bit includes a resource unit associated with the first bit in the plurality of resource units.

For example, the first information may directly indicate a time period and a channel of one or more zero power devices. For example, TXOPs of multiple channels obtained by the first device are divided into N resource units according to a certain rule or a parameter indicated by the first device, and each resource unit includes a time unit on a channel. The first information may include a bitmap, each bit in the bitmap corresponds to one or more of the plurality of zero power devices associated with the first device; moreover, each bit is also associated with one or more of the N resource units. Therefore, the first information may indicate resource units and channels of the one or more zero power devices.

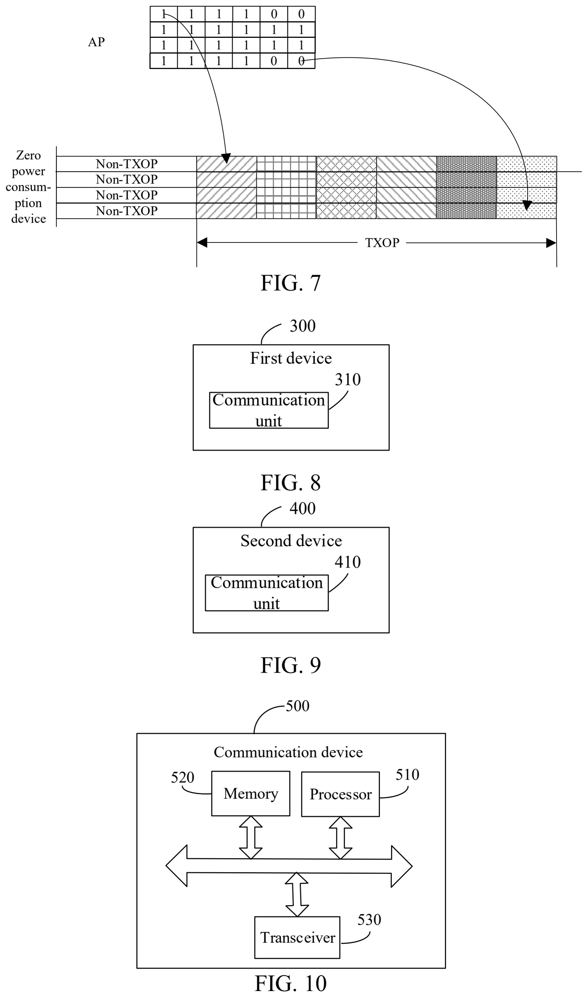

FIG. 7 is an example of a resource unit provided in the embodiments of the present disclosure.

As illustrated in FIG. 7, assuming that the first device is the AP, after the AP obtains TXOPs of four channels, a TXOP on each channel is equally divided into six resource units. In this case, the AP may indicate first information, for example, the first information is the bitmap, and bits in the bitmap may correspond to resource units, or may correspond to zero power devices, or may correspond to both resource units and zero power devices. For example, the bits in the bitmap correspond to both the resource units and the zero power devices, and in a case where a bit is set to 1, a corresponding zero power device performs transmission on a corresponding resource unit.

In some embodiments, the first information includes at least one of:
an identifier of a device capable of using the at least one time domain resource; or
an identifier of a device group capable of using the at least one time domain resource.

For example, in a case where the first information is used for indicating that the at least one time domain resource includes the target time domain resource, and the first information includes the identifier of the device capable of using the at least one time domain resource, the identifier of the device capable of using the at least one time domain resource includes an identifier of the second device.

For example, in a case where the first information is used for indicating that the at least one time domain resource includes the target time domain resource, and the first information includes the identifier of the device group capable of using the at least one time domain resource, the identifier of the device group capable of using the at least one time domain resource includes an identifier of a device group to which the second device belongs.

For example, in a case where the first information includes the identifier of the device capable of using the at least one time domain resource, or the first information includes the identifier of the device group capable of using the at least one time domain resource, the second device may determine the target time domain resource based on a predefined rule. For example, assuming that the second device is a target zero power device, the target zero power device may calculate a position of a target resource unit of the target zero power device in the plurality of resource units based on an ID of the target zero power device. For example, the target zero power device may perform a modulo operation on the ID of the target zero power device to determine the position of the target resource unit of the target zero power device in the plurality of resource units. The plurality of resource units may be a resource unit at a preset position in resource units included in the at least one time domain resource. For example, the plurality of resource units may be first K, last K, or middle K consecutive resource units in the resource units included in the at least one time domain resource, where K is a positive integer, or K may be determined based on the first information. For example, K is positively correlated with the number of identifiers of devices capable of using the at least one time domain resource, or K is positively correlated with the number of identifiers of device groups capable of using the at least one time domain resource.

It should be noted that the present disclosure does not limit specific implementations of the first information.

For example, the first information may include at least one of:
TXOP information: indicating a duration and/or an end time of the TXOP (e.g., the at least one time domain resource or the target time domain resource mentioned above);
a device ID or a device group ID: indicating a zero power device or a device group using the TXOP (e.g., the at least one time domain resource or the target time domain resource mentioned above);
a service period parameter: indicating an available time period or time window information, such as a service period (SP), of the zero power device within the TXOP (e.g., the at least one time domain resource or the target time domain resource mentioned above);
grant information: used to allocate a TXOP or a service period for the zero power device that the zero power device uses; or
trigger information: used to start a SP.

In some embodiments, the information carried by the first signal further includes at least one of:
information used for indicating the at least one channel;
information used for indicating the at least one time domain resource;
information used for dividing the at least one time domain resource; or
an identifier of the first device.

For example, the information used for indicating the at least one channel may be an index of the at least one channel, or may be a frequency band or a frequency point where the at least one channel is located.

For example, the information used for indicating the at least one time domain resource may include division information of each of the at least one time domain resource. In a case where the at least one time domain resource is a plurality of time domain resources, the division information of the plurality of time domain resources may be the same, partially the same, or different from each other, which is not limited in the present disclosure in detail. Division information of the resource units may include at least one of: the division number of the resource units, a position of each resource unit, a length of each resource unit, a starting position of each resource unit, or an ending position of each resource unit. For example, as illustrated in FIG. 7, the at least one time domain resource is 4 time domain resources, and each of the 4 time domain resources is equally divided into 6 resource units, which indicates that the 4 time domain resources has the same division information(e.g., the division number of the resource units), that is, 6.

Certainly, in other alternative embodiments, the information carried by the first signal may include any type of information transmitted by the AP to the STA.

For example, the information transmitted by the AP to the STA includes but is not limited to:
beacon information: including parameters and/or configuration related to a zero power (ZP) BSS;
a BSS ID, a compressed SSID or STA ID: indicating ID information of the first device;
acknowledgement (ACK) information: used for acknowledging transmission of the second device (e.g., the zero power device);
paging information: used for indicating that the first device has cached data of the second device (e.g., the zero power device) to be transmitted;
data: data transmitted by the first device to the zero power device;
synchronization information: such as timing synchronization function (TSF) information, which is used for time synchronization of the second device (e.g., the zero power device); or
traffic indication map (TIM) information: used for indicating the second device (e.g., the zero power device) that has cached data on the first device.

In some embodiments, the first device transmits the first signal to the second device through a physical layer air interface associated with the second device.

For example, the physical layer air interface associated with the second device may be a physical layer air interface related to the zero power communication, and a modulation manner of the physical layer air interface adopts a simple modulation and demodulation manner, such as the ASK or the FSK, and coding of the physical layer air interface adopts a simple coding scheme, such as repetition coding, Manchester coding, block coding or group coding.

Certainly, in other alternative embodiments, the first device may further be provided with other physical layer air interfaces. For example, the first device may further be provided with a physical layer air interface related to AP communication or STA communication. For example, for the physical layer air interface related to the AP communication or the STA communication, a modulation manner of the physical layer air interface may adopt an OFDM modulation manner, and coding of the physical layer air interface may adopt forward error correction (FEC) coding and the like. In other words, the first device may communicate with the zero power device through the physical layer air interface related to the zero power communication, and communicate with the AP, the STA and other relay nodes through the physical layer air interface related to the AP communication or the STA communication.

In some embodiments, a channel where the target time domain resource is located is the same as or different from a channel used for carrying the first signal.

For example, the second device determines the target time domain resource transmitted according to the first information carried by the first signal. In a case where the target time domain resource is a target resource unit, a second channel corresponding to the target resource unit may be different from the first channel receiving the first signal.

In some embodiments, the first signal is a power supply signal for supplying power to the second device, or the first signal is a carrier signal for performing back scattering by the second device, or the first signal includes a carrier signal for performing back scattering by the second device.

For example, the first signal is not only the power supply signal for supplying power to the second device but also the carrier signal for performing back scattering by the second device; alternatively, the first signal is not only the power supply signal for supplying power to the second device but also includes the carrier signal for performing back scattering by the second device.

For example, the zero power terminal may perform back scattering communication based on a received trigger signal.

For example, the trigger signal may be used for scheduling or triggering back scattering communication of the zero power terminal. The trigger signal carries scheduling information of the network device, or the trigger signal is a scheduling signaling or a scheduling signal transmitted by the network device.

It should be noted that the power supply signal and the trigger signal may be one signal or two independent signals, which is not limited in the present disclosure in detail.

For example, in a cellular network, since the zero power device is not powered by a battery, the zero power device need to be provided with a the power supply signal through the network device to obtain power for the zero power device, so as to perform the corresponding communication process. A signal for supplying power (i.e., the power supply signal) and a signal for transmitting information (i.e., the trigger signal) may be two signals or one signal. As another example, in the RFID technology, the power supply signal and the trigger signal may be one signal, and in the cellular passive Internet of Things technology, the power supply signal and the trigger signal may be two independent signals. These two signals may not be transmitted in the same frequency band. For example, the network device continuously or intermittently transmits power supply signals in a certain frequency band, and the zero power device harvests power. After obtaining energy, the zero power device may perform the corresponding communication process, such as measurement, channel/signal reception, or channel/signal transmission.

In some embodiments, the method 200 may further include:
receiving a second signal transmitted by the second device.

In some embodiments, the first device receives the second signal transmitted by the second device through a physical layer air interface associated with the second device.

In some embodiments, information carried by the second signal includes at least one of:
ACK information;
trigger information used for triggering an SP of the second device;
polling information; or
data.

For example, the ACK information is used for acknowledging transmission of the first device; the ACK information may be a grant Ack; the data may be data transmitted by the second device to the first device; and the poll information is used for requesting cached data transmission from the first device.

It should be noted that, the second signal may be transmitted not only to the first device, but also to other devices communicating therewith, for example, other zero power devices or other relay devices. In this case, the first device is not a device that communicates with the second device, but is only a device that obtains a TXOP for the second device. In this case, the second signal may carry address information of a receiving device, which is used for indicating a device ID for receiving the second signal.

The preferred implementations of the present disclosure are described in detail above in conjunction with the accompanying drawings; however, the present disclosure is not limited to the specific details of the implementations mentioned above. Within the technical concept of the present disclosure, a variety of simple modifications may be made to the technical solutions of the present disclosure, and these simple modifications all fall within the protection scope of the present disclosure. For example, the various specific technical features described in the specific implementations involved above may be combined in any suitable manner without contradiction. In order to avoid unnecessary repetition, the present disclosure will not further explain various possible combinations. As another example, the various implementation of the present disclosure may be arbitrarily combined, and as long as they do not violate the concept of the present disclosure, they should also be regarded as the contents disclosed in the present disclosure.

It should also be understood that in the various method embodiments of the present disclosure, the size of the serial numbers of the processes involved above does not mean an order of execution. The execution order of each process should be determined by its function and internal logic, and should not constitute any limitation on the implementation process in the embodiments of the present disclosure.

In conjunction with FIGS. 1 to 7, the method embodiments of the present disclosure are described in detail above, and the apparatus embodiments of the present disclosure will be described in detail below in conjunction with FIGS. 8 to 11.

FIG. 8 is a schematic block diagram of a first device 300 according to the embodiments of the present disclosure.

As illustrated in FIG. 8, the first device 300 may include:
a communication unit 310, configured to obtain, through channel access of multiple channels, at least one time domain resource on at least one channel in the multiple channels, where the at least one time domain resource includes a target time domain resource corresponding to a second device.

In some embodiments, the second device is associated with the first device, or the second device is a child node device of the first device.

In some embodiments, the communication unit 310 is further configured to:
transmit a first signal to the second device;
where information carried by the first signal includes first information; the first information is used for indicating that the at least one time domain resource includes the target time domain resource, or the first information is used for indicating the target time domain resource.

In some embodiments, in a case where the at least one time domain resource is divided to include a plurality of resource units, and the target time domain resource includes at least one resource unit in the plurality of resource units.

In some embodiments, the first information is used for indicating the at least one resource unit; and/or the first information is used for indicating a device corresponding to each of the plurality of resource units.

In some embodiments, a first bit in the first information is used for indicating whether a resource unit corresponding to a device other than the first device includes a resource unit associated with the first bit in the plurality of resource units; or the first bit is used for indicating whether a resource corresponding to a device associated with the first bit includes a resource unit associated with the first bit in the plurality of resource units.

In some embodiments, the first information includes at least one of:
an identifier of a device capable of using the at least one time domain resource; or
an identifier of a device group capable of using the at least one time domain resource.

In some embodiments, the information carried by the first signal further includes at least one of:
information used for indicating the at least one channel;
information used for indicating the at least one time domain resource;
information used for dividing the at least one time domain resource; or
an identifier of the first device.

In some embodiments, the communication unit 310 is specifically configured to:
transmit, through a physical layer air interface associated with the second device, the first signal to the second device.

In some embodiments, a channel where the target time domain resource is located is the same as or different from a channel used for carrying the first signal.

In some embodiments, the first signal is a power supply signal for supplying power to the second device, or the first signal is a carrier signal for performing back scattering by the second device, or the first signal includes a carrier signal for performing back scattering by the second device.

In some embodiments, the communication unit 310 is further configured to:
receive a second signal transmitted by the second device.

In some embodiments, the communication unit 310 is specifically configured to:
receive, through a physical layer air interface associated with the second device, the second signal transmitted by the second device.

In some embodiments, information carried by the second signal includes at least one of:
acknowledgment (ACK) information;
trigger information, used for triggering a service period (SP) of the second device;
polling information; or
data.

In some embodiments, the communication unit 310 is specifically configured to:
determine a first parameter set used by the first device when performing channel access; and
based on the first parameter set, obtain, through the channel access of the multiple channels, the at least one time domain resource.

In some embodiments, the multiple channels include a primary channel and at least one secondary channel; and the first parameter set includes at least one of:
a contention window (CW) parameter of the primary channel, an idle duration of the primary channel, or an idle duration of the secondary channel.

In some embodiments, the communication unit 310 is specifically configured to:
perform channel sensing on the primary channel;
in response to the primary channel being idle, determine that the at least one time domain resource includes a time domain resource on the primary channel;
perform channel sensing on the secondary channel within the idle duration of the secondary channel before a start time of the time domain resource on the primary channel; and
in response to the secondary channel being idle, determine that the at least one time domain resource includes a time domain resource on the secondary channel.

In some embodiments, the communication unit 310 is specifically configured to:
perform channel access based on a parameter set of each of the multiple channels.

In some embodiments, the second device is a device without channel access capability.

In some embodiments, the second device is a zero power device.

In some embodiments, the first device is an access point device or a relay device.

It should be understood that the apparatus embodiments and the method embodiments may correspond to each other, and the similar descriptions of the apparatus embodiments may refer to those of the method embodiments. Specifically, the first device 300 illustrated in FIG. 8 may correspond to the corresponding subject in the method 200 for performing the embodiments of the present disclosure, and the above-mentioned and other operations and/or functions of various units in the first device 300 are respectively for implementing the corresponding procedure in various methods provided in the embodiments of the present disclosure, which will not be repeated here for the sake of brevity.

FIG. 9 is a schematic block diagram of a second device 400 according to the embodiments of the present disclosure.

As illustrated in FIG. 9, the second device 400 may include:
a communication unit 410, configured to receive a first signal transmitted by a first device;
where information carried by the first signal includes first information; the first information is used for indicating that at least one time domain resource obtained by the first device on at least one channel in multiple channels through channel access of the multiple channels includes a target time domain resource corresponding to the second device, or the first information is used for indicating the target time domain resource.

In some embodiments, the second device is associated with the first device, or the second device is a child node device of the first device.

In some embodiments, in a case where the at least one time domain resource is divided to include a plurality of resource units, and the target time domain resource includes at least one resource unit in the plurality of resource units.

In some embodiments, the first information is used for indicating the at least one resource unit; and/or the first information is used for indicating a device corresponding to each of the plurality of resource units.

In some embodiments, a first bit in the first information is used for indicating whether a resource unit corresponding to a device other than the first device includes a resource unit associated with the first bit in the plurality of resource units; or the first bit is used for indicating whether a resource corresponding to a device associated with the first bit includes a resource unit associated with the first bit in the plurality of resource units.

In some embodiments, the first information includes at least one of:
an identifier of a device capable of using the at least one time domain resource; or
an identifier of a device group capable of using the at least one time domain resource.

In some embodiments, the information carried by the first signal further includes at least one of:
information used for indicating the at least one channel;
information used for indicating the at least one time domain resource;
information used for dividing the at least one time domain resource; or
an identifier of the first device.

In some embodiments, a channel where the target time domain resource is located is the same as or different from a channel used for carrying the first signal.

In some embodiments, the first signal is a power supply signal for supplying power to the second device, or the first signal is a carrier signal for performing back scattering by the second device, or the first signal includes a carrier signal for performing back scattering by the second device.

In some embodiments, the communication unit 410 is further configured to:
transmit a second signal to the first device.

In some embodiments, information carried by the second signal includes at least one of:
acknowledgment (ACK) information;
trigger information, used for triggering a service period (SP) of the second device;
polling information; or
data.

In some embodiments, the second device is a device without channel access capability.

In some embodiments, the second device is a zero power device.

In some embodiments, the first device is an access point device or a relay device.

It should be understood that the apparatus embodiments and the method embodiments may correspond to each other, and the similar descriptions of the apparatus embodiments may refer to those of the method embodiments. Specifically, the second device 400 illustrated in FIG. 9 may correspond to the corresponding subject in the method 200 for performing the embodiments of the present disclosure, and the above-mentioned and other operations and/or functions of various units in the second device 400 are respectively for implementing the corresponding procedure in various methods provided in the embodiments of the present disclosure, which will not be repeated here for the sake of brevity.

The communication device according to the embodiments of the present disclosure is described above from a perspective of functional modules in combination with the accompanying drawings. It should be understood that the functional module may be implemented in the form of hardware, may be implemented by instructions in the form of software, or may be implemented by a combination of hardware and software modules. Specifically, various steps of the method embodiments in the embodiments of the present disclosure may be completed by the hardware integrated logic circuit and/or software instructions in the processor. The steps of the methods disclosed in combination with the embodiments of the present disclosure may be directly embodied by execution of a hardware decoding processor, or by execution of a combination of hardware and software modules in a decoding processor. Optionally, the software module may be located in the mature storage medium in the art, such as a random access memory, a flash memory, a read-only memory, a programmable read-only memory, an electrically erasable programmable memory, or a register. The storage medium is located in the memory, and the processor reads the information in the memory and completes the steps in the method embodiments mentioned above in combination with hardware of the processor.

For example, the communication unit mentioned above may be implemented by a transceiver.

FIG. 10 is a schematic structural diagram of a communication device 500 according to the embodiments of the present disclosure.

As illustrated in FIG. 10, the communication device 500 may include a processor 510.

The processor 510 may call a computer program from a memory and run the computer program, to implement the methods in the embodiments of the present disclosure.

As illustrated in FIG. 10, the communication device 500 may further include a memory 520.

The memory 520 may be configured to store information, and may further be configured to store codes and instructions executed by the processor 510. The processor 510 may call a computer program from the memory 520 and run the computer program, to implement the methods in the embodiments of the present disclosure. The memory 520 may be a separate device independent of the processor 510, or may be integrated into the processor 510.

As illustrated in FIG. 10, the communication device 500 may further include a transceiver 530.

The processor 510 may control the transceiver 530 to communicate with other devices, and specifically, may transmit information or data to other devices, or receive information or data transmitted by other devices. The transceiver 530 may include a transmitter and a receiver. The transceiver 530 may further include antenna(s), and the number of the antenna(s) may be one or more.

It should be understood that various components in the communication device 500 are connected through a bus system, where the bus system includes not only a data bus but also a power bus, a control bus and a status signal bus. It should also be understood that the communication device 500 may be the first device or the second device in the embodiments of the present disclosure, and the communication device 500 may implement corresponding processes implemented by the first device or the second device in various methods in the embodiments of the present disclosure, which will not repeated here for the sake of brevity.

In addition, the embodiments of the present disclosure further provide a chip.

For example, the chip may be an integrated circuit chip with signal processing capability, and may implement or perform various methods, steps and logic block diagrams disclosed in the embodiments of the present disclosure. The chip may also be referred to as a system-level chip, a system chip, a chip system, or a system-on-chip chip, or the like. Optionally, the chip may be applied to various communication devices, so as to enable the communication devices equipped with the chip to perform the methods, steps and logic block diagrams disclosed in the embodiments of the present disclosure.

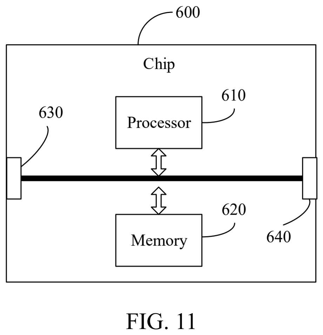

FIG. 11 is a schematic structural diagram of a chip 600 according to the embodiments of the present disclosure.

As illustrated in FIG. 11, the chip 600 includes a processor 610.

The processor 610 may call a computer program from a memory and run the computer program, to implement the methods in the embodiments of the present disclosure.

As illustrated in FIG. 11, the chip 600 may further include a memory 620.

The processor 610 may call a computer program from the memory 620 and run the computer program, to implement the methods in the embodiments of the present disclosure. The memory 620 may be configured to store indication information, and may further be configured to store codes and instructions executed by the processor 610. The memory 620 may be a separate device independent of the processor 610, or may be integrated into the processor 610.

As illustrated in FIG. 11, the chip 600 may further include an input interface 630.

The processor 610 may control the input interface 630 to communicate with other devices or chips, and specifically, may obtain information or data transmitted by other devices or chips.

As illustrated in FIG. 11, the chip 600 may further include an output interface 640.

The processor 610 may control the output interface 640 to communicate with other devices or chips, and specifically, may output information or data to other devices or chips.

It should be understood that the various components in the chip 600 are connected through a bus system, where the bus system includes not only a data bus but also a power bus, a control bus and a status signal bus. It should also be understood that the chip 600 may be applied to the first device or the second device in the embodiments of the present disclosure, and the chip may implement corresponding processes implemented by the first device or the second device in various methods in the embodiments of the present disclosure, which will not repeated here for the sake of brevity.

The processors mentioned above may include but are not limited to:
a general-purpose processor, a digital signal processor (DSP), an application specific integrated circuit (ASIC), a field programmable gate array (FPGA) or other programmable logic devices, discrete gate or transistor logic devices, discrete hardware components or the like.

The processor may be used to implement or perform various methods, steps, and logic block diagrams disclosed in the embodiments of the present disclosure. The steps of the methods disclosed in combination with the embodiments of the present disclosure may be directly embodied by execution of a hardware decoding processor, or by execution of a combination of hardware and software modules in a decoding processor. The software module may be located in the mature storage medium in the art, such as a random access memory, a flash memory, a read-only memory, a programmable read-only memory, an erasable programmable memory, or a register. The storage medium is located in a memory, and the processor reads information in the memory and completes the steps of the above methods in combination with hardware of the processor.

The memory mentioned above includes but is not limited to:
a volatile (transitory) memory and/or a non-volatile (non-transitory) memory. The non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (RAM), which is used as an external cache. As an example but not a limitation, a variety of forms of RAMs are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct memory bus random access memory (direct rambus RAM, DR RAM).

It should be noted that the memories described herein are intended to include these and any other suitable types of memories.

The embodiments of the present disclosure further provide a computer-readable storage medium for storing a computer program. The computer-readable storage medium stores one or more programs, and the one or more programs include instructions. When executed by a portable electronic device including a plurality of application programs, the instructions may enable the portable electronic device to execute the wireless communication methods provided in the present disclosure. The computer-readable storage medium may be applied to the first device in the embodiments of the present disclosure, and the computer program enables a computer to perform the corresponding processes implemented by the first device in the various methods of the embodiments of the present disclosure. The computer-readable storage medium may be applied to the second device in the embodiments of the present disclosure, and the computer program enables the computer to perform the corresponding processes implemented by the second device in the various methods of the embodiments of the present disclosure.

The embodiments of the present disclosure further provide a computer program product, which includes a computer program. The computer program product may be applied to the first device in the embodiments of the present disclosure, and the computer program enables a computer to perform the corresponding processes implemented by the first device in the various methods of the embodiments of the present disclosure. The computer program product may be applied to the second device in the embodiments of the present disclosure, and the computer program enables the computer to perform the corresponding processes implemented by the second device in the various methods of the embodiments of the present disclosure.

The embodiments of the present disclosure further provide a computer program. The computer program, when being executed by a computer, may perform the wireless communication methods provided in the present disclosure. The computer program may be applied to the first device in the embodiments of the present disclosure. The computer program, when run on a computer, enables the computer to perform the corresponding processes implemented by the first device in the various methods in the embodiments of the present disclosure. The computer program may be applied to the second device in the embodiments of the present disclosure. The computer program, when run on a computer, enables the computer to perform the corresponding processes implemented by the second device in the various methods in the embodiments of the present disclosure.

The present disclosure further provides a communication system, and the communication system may include the first device and the second device mentioned above, which will not be repeated here for the sake of brevity. It should be noted that the term "system" herein may also be referred to as "network management architecture", "network system", or the like.

It should be noted that the terms used in the embodiments of the present disclosure and the appended claims are for the purpose of describing specific embodiments only and are not intended to limit the embodiments of the present disclosure. For example, singular forms about "a" "said" "above" and "the" used in the embodiments of the present disclosure and the appended claims are intended to include the plural forms as well, unless the context clearly indicates otherwise.

Those of ordinary skills in the art will appreciate that units and algorithm steps of various examples described in conjunction with the embodiments disclosed herein may be implemented in electronic hardware, or in a combination of computer software and electronic hardware. Whether these functions are performed in a form of hardware or software depends on specific applications and design constraints of a technical solution. Those skilled in the art may use respective method to implement the described functions for each specific application, but such implementation should not be considered to be beyond the scope of the embodiments of the present disclosure. If being implemented in the form of a software functional unit and sold or used as an independent product, the functions may be stored in a computer-readable storage medium. Based on such an understanding, for the technical solution in the embodiments of the present disclosure, an essence of the technical solution or a part of the technical solution that contributes to the prior art or a part of the technical solution may be embodied in the form of a software product, and the computer software product is stored in a storage medium and includes several instructions for enabling a computer device (which may be a personal computer, a server, a network device, or the like) to perform all or part of the steps of the methods described in the embodiments of the present disclosure. The aforementioned storage media include a USB flash drive (U disk), a mobile hard disk, a read-only memory (ROM), a random access memory (RAM), a disk, an optical disk, and other media capable of storing program codes.

It may be understood by those skilled in the art that for convenience and brevity of the description, specific operating processes of system, apparatuses and units described above may refer to the corresponding processes in the above method embodiments, and details are not repeated here. In several embodiments provided in the present disclosure, it should be understood that the disclosed systems, apparatus, and methods may be implemented in other ways. For example, the division of units or modules or components in the apparatus embodiments described above is only a logical function division, and there may be other division methods in actual implementation. For example, a plurality of units or modules or components may be combined or integrated into another system, or some units or modules or components may be ignored or not performed. As another example, units/modules/components described above as separate/displayed components may or may not be physically separated, that is, they may be located in one place, or may be distributed on a plurality of network units. Some or all of the units/modules/components may be selected according to actual needs to achieve the purpose of the embodiments of the present disclosure. Finally, it should be noted that mutual coupling or direct coupling or communication connection shown or discussed above may be an indirect coupling or communication connection through some interfaces, apparatuses or units, which may be in electrical, mechanical or other forms.

The foregoing descriptions are merely specific implementations of the present disclosure, but the protection scope of the present disclosure is not limited thereto. Variations or replacements that any person skilled in the art could readily conceive of within the technical scope disclosed in the present disclosure shall be included in the protection scope of the present disclosure. Therefore, the protection scope of the present disclosure shall be subject to the protection scope of claims.

## Claims

1. A wireless communication method applied to a first device, and the method comprising:
obtaining, through channel access of multiple channels, at least one time domain resource on at least one channel in the multiple channels, wherein the at least one time domain resource comprises a target time domain resource corresponding to a second device.

2. The method according to claim 1, wherein the second device is associated with the first device, or the second device is a child node device of the first device.

3. The method according to claim 1 or 2, further comprising:
transmitting a first signal to the second device;
wherein information carried by the first signal comprises first information; the first information is used for indicating that the at least one time domain resource comprises the target time domain resource, or the first information is used for indicating the target time domain resource.

4. The method according to claim 3, wherein in a case where the at least one time domain resource includes a plurality of resource units after division, the target time domain resource comprises at least one resource unit in the plurality of resource units.

5. The method according to claim 4, wherein the first information is used for indicating the at least one resource unit; and/or the first information is used for indicating a device corresponding to each of the plurality of resource units.

6. The method according to claim 4, wherein a first bit in the first information is used for indicating whether a resource unit corresponding to a device other than the first device comprises a resource unit associated with the first bit in the plurality of resource units; or the first bit is used for indicating whether a resource corresponding to a device associated with the first bit comprises a resource unit associated with the first bit in the plurality of resource units.

7. The method according to claim 3, wherein the first information comprises at least one of:
an identifier of a device capable of using the at least one time domain resource; or
an identifier of a device group capable of using the at least one time domain resource.

8. The method according to any one of claims 3 to 7, wherein the information carried by the first signal further comprises at least one of:
information used for indicating the at least one channel;
information used for indicating the at least one time domain resource;
information used for dividing the at least one time domain resource; or
an identifier of the first device.

9. The method according to any one of claims 3 to 8, wherein transmitting the first signal to the second device comprises:
transmitting, through a physical layer air interface associated with the second device, the first signal to the second device.

10. The method according to any one of claims 3 to 9, wherein a channel where the target time domain resource is located is the same as or different from a channel used for carrying the first signal.

11. The method according to any one of claims 3 to 10, wherein the first signal is a power supply signal for supplying power to the second device, or the first signal is a carrier signal used for performing back scattering by the second device, or the first signal comprises a carrier signal used for performing back scattering by the second device.

12. The method according to any one of claims 1 to 11, further comprising:
receiving a second signal transmitted by the second device.

13. The method according to claim 12, wherein receiving the second signal transmitted by the second device comprises:
receiving, through a physical layer air interface associated with the second device, the second signal transmitted by the second device.

14. The method according to claim 12 or 13, wherein information carried by the second signal comprises at least one of:
acknowledgment (ACK) information;
trigger information used for triggering a service period (SP) of the second device;
polling information; or
data.

15. The method according to any one of claims 1 to 14, wherein obatining, through channel access of the multiple channels, the at least one time domain resource on the at least one channel in the multiple channels comprises:
determining a first parameter set used by the first device when performing channel access; and
obtaining, through channel access of the multiple channels, the at least one time domain resource based on the first parameter set.

16. The method according to claim 15, wherein the multiple channels comprises a primary channel and at least one secondary channel; and the first parameter set comprises at least one of:
a contention window (CW) parameter of the primary channel, an idle duration of the primary channel, or an idle duration of the secondary channel.

17. The method according to claim 16, wherein obtaining, through channel access of the multiple channels, the at least one time domain resource based on the first parameter set comprises:
performing channel sensing on the primary channel;
in response to the primary channel being idle, determining that the at least one time domain resource comprises a time domain resource on the primary channel;
performing channel sensing on the secondary channel within the idle duration of the secondary channel before a start time of the time domain resource on the primary channel; and
in response to the secondary channel being idle, determining that the at least one time domain resource comprises a time domain resource on the secondary channel.

18. The method according to claim 15, wherein obtaining, through channel access of the multiple channels, the at least one time domain resource based on the first parameter set comprises:
performing channel access based on a parameter set of each of the multiple channels.

19. The method according to any one of claims 1 to 18, wherein the second device is a device without channel access capability.

20. The method according to claim 19, wherein the second device is a zero power device.

21. The method according to any one of claims 1 to 20, wherein the first device is an access point device or a relay device.

22. A wireless communication method appled to a second device, and the method comprising:
receiving a first signal transmitted by a first device;
wherein information carried by the first signal comprises first information; the first information is used for indicating that at least one time domain resource obtained by the first device on at least one channel in multiple channels through channel access of the multiple channels comprises a target time domain resource corresponding to the second device, or the first information is used for indicating the target time domain resource.

23. The method according to claim 22, wherein the second device is associated with the first device, or the second device is a child node device of the first device.

24. The method according to claim 22 or 23, wherein in a case where the at least one time domain resource includes a plurality of resource units after division, the target time domain resource comprises at least one resource unit in the plurality of resource units.

25. The method according to claim 24, wherein the first information is used for indicating the at least one resource unit; and/or the first information is used for indicating a device corresponding to each of the plurality of resource units.

26. The method according to claim 24, wherein a first bit in the first information is used for indicating whether a resource unit corresponding to a device other than the first device comprises a resource unit associated with the first bit in the plurality of resource units; or the first bit is used for indicating whether a resource corresponding to a device associated with the first bit comprises a resource unit associated with the first bit in the plurality of resource units.

27. The method according to claim 22 or 23, wherein the first information comprises at least one of:
an identifier of a device capable of using the at least one time domain resource; or
an identifier of a device group capable of using the at least one time domain resource.

28. The method according to any one of claims 22 to 27, wherein the information carried by the first signal further comprises at least one of:
information used for indicating the at least one channel;
information used for indicating the at least one time domain resource;
information used for dividing the at least one time domain resource; or
an identifier of the first device.

29. The method according to any one of claims 22 to 28, wherein a channel where the target time domain resource is located is the same as or different from a channel used for carrying the first signal.

30. The method according to any one of claims 22 to 29, wherein the first signal is a power supply signal for supplying power to the second device, or the first signal is a carrier signal used for performing back scattering by the second device, or the first signal comprises a carrier signal used for performing back scattering by the second device.

31. The method according to any one of claims 22 to 30, further comprising:
transmitting a second signal to the first device.

32. The method according to claim 31, wherein information carried by the second signal comprises at least one of:
acknowledgment (ACK) information;
trigger information, used for triggering a service period (SP) of the second device;
polling information; or
data.

33. The method according to any one of claims 22 to 32, wherein the second device is a device without channel access capability.

34. The method according to claim 33, wherein the second device is a zero power device.

35. The method according to any one of claims 22 to 34, wherein the first device is an access point device or a relay device.

36. A wireless communication method, applied to a first device, and comprising:
a communication unit, configured to obtain, through channel access of multiple channels, at least one time domain resource on at least one channel in the multiple channels, wherein the at least one time domain resource comprises a target time domain resource corresponding to a second device.

37. A second device, comprising:
a communication unit, configured to receive a first signal transmitted by a first device;
wherein information carried by the first signal comprises first information; the first information is used for indicating that at least one time domain resource obtained by the first device on at least one channel in multiple channels through channel access of the multiple channels comprises a target time domain resource corresponding to the second device, or the first information is used for indicating the target time domain resource.

38. A first device, comprising:
a transceiver, a processor and a memory, wherein the memory is configured to store a computer program, and the processor is configured to call the computer program stored in the memory and run the computer program, to enable the transceiver to perform the method according to any one of claims 1 to 21.

39. A second device, comprising:
a transceiver, a processor and a memory, wherein the memory is configured to store a computer program, and the processor is configured to call the computer program stored in the memory and run the computer program, to enable the transceiver to perform the method according to any one of claims 22 to 35.

40. A chip, comprising:
a processor, configured to call a computer program from a memory and run the computer program, to enable a device equipped with the chip to perform the method according to any one of claims 1 to 21, or the method according to any one of claims 22 to 35.

41. A computer-readable storage medium, configured to store a computer program, wherein the computer program, when run on a computer, enables the computer to perform the method according to any one of claims 1 to 21 or the method according to any one of claims 22 to 35.

42. A computer program product, comprising computer program instructions, wherein the computer program instructions enable a computer to perform the method according to any one of claims 1 to 21 or the method according to any one of claims 22 to 35.

43. A computer program, wherein the computer program enables a computer to perform the method according to any one of claims 1 to 21 or the method according to any one of claims 22 to 35.
